# EUROPÄISCHE PATENTANMELDUNG

(11) **EP 4 707 645 A1**
(43) Veröffentlichungstag der Anmeldung: **11.03.2026**
(21) Anmeldenummer: 25198710.3
(22) Anmeldetag: 28.08.2025
(51) Int. Cl.: F16K 1/42, F16K 15/04, F16K 25/00

(54) **VENTIL FÜR EINE STRÖMUNGSTECHNISCHE EINRICHTUNG SOWIE VERFAHREN ZUM HERSTELLEN EINES SOLCHEN VENTILS**

(30) Priorität: 06.09.2024 DE 102024125711
(71) Anmelder: AUDI Aktiengesellschaft, 85057 Ingolstadt (DE)
(72) Erfinder: von Hörsten, Tim, 74348 Lauffen (DE); Dawidziak, Johannes, 97950 Großrinderfeld (DE); Geist, Daniel, 74172 Neckarsulm (DE)
(74) Vertreter: Gleiss Große Schrell und Partner mbB

(57) **Zusammenfassung**

Die Erfindung betrifft ein Ventil (1) für eine strömungstechnische Einrichtung, mit einem Ventilsitz (2) und einem relativ zu dem Ventilsitz (2) verlagerbaren Ventilelement (3), das in einer ersten Stellung zum Einstellen eines ersten Durchströmungsquerschnitts durch den Ventilsitz (2) an dem Ventilsitz (2) anliegt und in einer zweiten Stellung zum Einstellen eines von dem ersten Durchströmungsquerschnitt verschiedenen zweiten Durchströmungsquerschnitts durch den Ventilsitz (2) von dem Ventilsitz (2) beabstandet angeordnet ist. Dabei ist vorgesehen, dass der Ventilsitz (2) und/oder das Ventilelement (3) zur Reduzierung einer Haftwirkung zwischen Ventilsitz (2) und Ventilelement (3) mit einer mehrere Vertiefungen (8, 9, 10) aufweisenden Oberflächenstruktur (7) versehen sind/ist.

## Beschreibung

Die Erfindung betrifft ein Ventil für eine strömungstechnische Einrichtung, mit einem Ventilsitz und einem relativ zu dem Ventilsitz verlagerbaren Ventilelement, das in einer ersten Stellung zum Einstellen eines ersten Durchströmungsquerschnitts durch den Ventilsitz an dem Ventilsitz anliegt und in einer zweiten Stellung zum Einstellen eines von dem ersten Durchströmungsquerschnitt verschiedenen zweiten Durchströmungsquerschnitts durch den Ventilsitz von dem Ventilsitz beabstandet angeordnet ist. Die Erfindung betrifft weiterhin ein Verfahren zum Herstellen eines solchen Ventils.

Aus dem Stand der Technik ist zum Beispiel die Druckschrift EP 1 953 430 A1 bekannt. Diese beschreibt ein Hydraulik-Rückschlagventil, mit einem Gehäuse, in dem benachbart zu einem Ventilsitz ein axial beweglicher Schließkörper, eine Schließfeder und eine dem Ventilsitz abgewandte, die Schließfeder stützende Scheibe mit Durchlässen angeordnet sind, wobei das Gehäuse zwei koaxiale Anschlussstutzen jeweils mit einem Innenkanal und einem Außengewindeabschnitt sowie zwischen den Außengewindeabschnitten wenigstens einen Mutterabschnitt aufweist, und wahlweise mit jedem Außengewindeabschnitt entweder in einem Rohr- beziehungsweise Schlauchanschluss oder in einem Einschraubanschluss, jeweils für eine bestimmte Nennweite, befestigbar ist. Dabei ist vorgesehen, dass das Gehäuse mit nur einem Mutterabschnitt zwischen den beiden Außengewindeabschnitten ausgebildet ist, und dass die Ventillänge höchstens der 4 bis 5,5-fachen Nennweite in zumindest einem Innenkanal entspricht.

Es ist Aufgabe der Erfindung, ein Ventil für eine strömungstechnische Einrichtung vorzuschlagen, welches gegenüber bekannten Ventilen Vorteile aufweist, insbesondere stets ein zuverlässiges Verlagern des Ventilelements relativ zu dem Ventilsitz und somit ein Zuverlässiges Öffnen und Schließen des Ventils ermöglicht.

Dies wird erfindungsgemäß mit einem Ventil für eine strömungstechnische Einrichtung mit den Merkmalen des Anspruchs 1 erreicht. Dabei ist vorgesehen, dass der Ventilsitz und/oder das Ventilelement zur Reduzierung einer Haftwirkung zwischen Ventilsitz und Ventilelement mit einer mehrere Vertiefungen aufweisenden Oberflächenstruktur versehen sind/ist.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Das Ventil ist beispielsweise Bestandteil der strömungstechnischen Einrichtung, kann jedoch selbstverständlich auch separat von dieser vorliegen, insbesondere bis zu einer Montage des Ventils an und/oder in der strömungstechnischen Einrichtung. Die strömungstechnische Einrichtung ist wiederum bevorzugt Bestandteil eines Kraftfahrzeugs, insbesondere einer Schmier- und/oder Kühleinrichtung des Kraftfahrzeugs. Das Ventil dient zum Schalten einer Strömungsverbindung. Zu diesem Zweck verfügt es über zwei Fluidanschlüsse, welche über einen Fluidkanal des Ventils strömungstechnisch aneinander angeschlossen sind. Strömungstechnisch zwischen den Fluidanschlüssen liegt der Ventilsitz vor, der mit dem Ventilelement zusammenwirkt, um einen bestimmten Durchströmungsquerschnitt für ein Fluid durch den Ventilsitz und damit auch durch das Ventil einzustellen.

Das Ventilelement ist relativ zu dem Ventilsitz verlagerbar und hierbei zumindest in der ersten Stellung und in der zweiten Stellung anordenbar. In der ersten Stellung wirken der Ventilsitz und das Ventilelement derart zusammen, dass der erste Durchströmungsquerschnitt durch den Ventilsitz hindurch vorliegt und in der zweiten Stellung derart, dass der zweite Durchströmungsquerschnitt durch den Ventilsitz hindurch vorliegt. Die beiden Durchströmungsquerschnitte, also der erste Durchströmungsquerschnitt und der zweite Durchströmungsquerschnitt, sind hierbei voneinander verschieden, vorzugsweise ist der erste Durchströmungsquerschnitt kleiner als der zweite Durchströmungsquerschnitt.

In der ersten Stellung liegt das Ventilelement zumindest bereichsweise an dem Ventilsitz an, sodass der erste Durchströmungsquerschnitt insbesondere gleich null oder nahezu gleich null ist. In der zweiten Stellung ist das Ventilelement hingegen von dem Ventilsitz beabstandet angeordnet, sodass das Fluid zwischen dem Ventilsitz und dem Ventilelement hindurchströmen kann, insbesondere aus Richtung eines ersten der Fluidanschlüsse in Richtung eines zweiten der Fluidanschlüsse.

Vorzugsweise ist das Ventil ein fluidbetätigtes Ventil. Hierunter ist zu verstehen, dass das Verlagern des Ventilelements relativ zu dem Ventilsitz durch das Fluid selbst erfolgt, welches an dem Ventil anliegt und/oder das Ventil durchströmt. In Abhängigkeit von einer Strömungsrichtung und/oder einem Fluiddruck des Fluids, insbesondere einer Fluiddruckdifferenz des Fluids über das Ventil, drängt das Fluid das Ventilelement in eine bestimmte Stellung relativ zu dem Ventilsitz, beispielsweise in die erste Stellung, in die zweite Stellung oder in eine zwischen der ersten Stellung und der zweiten Stellung liegende dritte Stellung.

Vorzugsweise ist das Ventil als Rückschlagventil ausgestaltet. Das bedeutet, dass das Ventil eine Durchströmung mit dem Fluid in eine erste Strömungsrichtung, insbesondere aus Richtung des ersten Fluidanschlusses in Richtung des zweiten Fluidanschlusses, zulässt, jedoch in einer der ersten Strömungsrichtung entgegengesetzten zweiten Strömungsrichtung, insbesondere aus Richtung des zweiten Fluidanschlusses in Richtung des ersten Fluidanschlusses, unterbindet.

Das Ventil ist hierbei derart ausgestaltet, dass bei Vorliegen der ersten Strömungsrichtung das Fluid das Ventilelement in Richtung der zweiten Stellung drängt, also von dem Ventilsitz fort. Bei Vorliegen der zweiten Strömungsrichtung drängt das Fluid hingegen das Ventilelement in Richtung der ersten Stellung, insbesondere bis in die erste Stellung, sodass das Ventilelement an dem Ventilsitz anliegt. Das Ventil kann federlos ausgestaltet sein, sodass das Verlagern des Ventilelements relativ zu dem Ventilsitz allein von dem Fluid bewirkt wird. Alternativ ist das Ventilelement federkraftbeaufschlagt, wobei ein Federelement auf das Ventilelement eine Federkraft bewirkt, welche es zumindest zeitweise in Richtung der ersten Stellung drängt.

Der Ventilsitz und das Ventilelement können grundsätzlich aus beliebigen Materialien bestehen, beispielsweise der Ventilsitz aus einem Ventilsitzmaterial und das Ventilelement aus einem Ventilelementmaterial. Die beiden Materialien können identisch oder voneinander verschieden sein. Beispielsweise entsprechen die Materialien jeweils einem der nachfolgend genannten Materialien: Metall, insbesondere Gusseisen, beispielsweise Sphärogusseisen, Edelstahl und Messing, und Kunststoff, beispielsweise Polypropylen und Polyvinylchlorid. Die genannten Materialien sind jedoch rein beispielhaft.

Das Ventilelement verfügt über eine Ventilelementfläche, mit welcher es in der ersten Stellung an einer Ventilsitzfläche des Ventilsitzes anliegt. Unter der Ventilelementfläche ist hierbei ausschließlich diejenige Fläche des Ventilelements zu verstehen, welche an dem Ventilsitz beziehungsweise seiner Ventilsitzfläche anliegt. Umgekehrt ist unter der Ventilsitzfläche ausschließlich diejenige Fläche zu verstehen, welche an dem Ventilelement beziehungsweise der Ventilelementfläche anliegt. Vorzugsweise liegt in der ersten Stellung zwischen dem Ventilsitz und Ventilelement beziehungsweise der Ventilsitzfläche und der Ventilelementfläche ein Flächenkontakt oder zumindest ein Linienkontakt vor, vorzugsweise in Umfangsrichtung bezüglich einer Längsmittelachse des Ventilsitzes durchgehend. Hierdurch wird ein kleiner erster Durchströmungsquerschnitt erzielt, beispielsweise ein erster Durchströmungsquerschnitt von null oder zumindest von nahezu null.

Über seine Lebensdauer hinweg öffnet und schließt das Ventil häufig. Bei jedem Schließen schlägt das Ventilelement an dem Ventilsitz an, sodass die Ventilsitzfläche und/oder die Ventilelementfläche mit der Zeit plastisch verformt werden. Insbesondere prägt sich eine Außenkontur des Ventilelements in den Ventilsitz ein, sodass in der Ventilsitzfläche ein Negativ des Ventilelements abgebildet wird. Hierdurch verschlechtert sich ein Öffnungsverhalten des Ventils, das Ventilelement benötigt also zunehmend mehr Zeit, um aus seiner ersten Stellung heraus verlagert zu werden und eine Strömung durch den Ventilsitz hindurch freizugeben. Dies ist insbesondere bei hohen Schaltfrequenzen des Ventils nachteilig, da das Ventilelement nicht hinreichend Zeit hat, um vollständig in seine zweite Stellung zu gelangen, bevor es wieder in die erste Stellung zurück verlagert wird. Dies führt zu einem geringeren Fluiddurchsatz durch das Ventil.

Aus diesem Grund ist es erfindungsgemäß vorgesehen, die Haftwirkung zwischen dem Ventilsitz und dem Ventilelement zu reduzieren. Hierzu werden der Ventilsitz und/oder das Ventilelement, insbesondere jeweils, mit der Oberflächenstruktur versehen. Die Oberflächenstruktur verfügt über mehrere Vertiefungen. Anders ausgedrückt sind in dem Ventilsitz mehrere Vertiefungen hergestellt, welche die Oberflächenstruktur bilden. Zusätzlich oder alternativ sind mehrere Vertiefungen in dem Ventilelement hergestellt, welche ebenfalls eine Oberflächenstruktur darstellen. Die Vertiefungen sind hierbei derart angeordnet und ausgestaltet, dass sie die Haftwirkung zwischen Ventilsitz und dem Ventilelement bei dem Öffnen des Ventils, also bei dem Verlagern des Ventilelements aus seiner ersten Stellung heraus, verringern. Insbesondere sind hierzu die Vertiefungen in der Ventilsitzfläche und/oder der Ventilelementfläche hergestellt, also dort, wo das Ventilelement an dem Ventilsitz anliegt und umgekehrt.

Vorzugsweise sind die Vertiefungen derart angeordnet, dass in der ersten Stellung des Ventilelements wenigstens eine der Vertiefungen in der Ventilsitzfläche oder in der Ventilelementfläche vorliegt beziehungsweise diese durchgreift, sodass also die wenigstens eine Vertiefung in einem Kontaktbereich zwischen dem Ventilsitz und dem Ventilelement angeordnet ist. Das bedeutet, dass der Ventilsitz und das Ventilelement nicht mehr entlang einer durchgehenden Kontaktlinie aneinander anliegen, sondern dass die Kontaktlinie von der Vertiefung beziehungsweise mehreren der Vertiefungen unterbrochen ist. Hierdurch wird das Verlagern des Ventilelements aus der ersten Stellung heraus deutlich erleichtert, sodass mit dem Ventil über seine gesamte Lebensdauer hinweg auch hohe Schaltfrequenzen umgesetzt werden können.

Eine Weiterbildung der Erfindung sieht vor, dass das Ventil als Rückschlagventil ausgestaltet und das Ventilelement von einem Federelement mit einer in Richtung des Ventilsitzes gerichteten Federkraft beaufschlagt ist. Auf eine solche Ausführungsform des Ventils wurde bereits hingewiesen. Das Rückschlagventil ist dazu vorgesehen und ausgestaltet, eine Fluidströmung in einer ersten Strömungsrichtung zuzulassen und in einer der ersten Strömungsrichtung entgegengerichteten zweiten Strömungsrichtung zu unterbinden. Im Falle der ersten Strömungsrichtung gibt also das Ventilelement eine Durchströmung des Ventils frei, wohingegen es bei der zweiten Strömungsrichtung die Durchströmung des Ventil unterbricht.

Das Ventilelement ist federkraftbeaufschlagt. Zu diesem Zweck greift das Federelement an dem Ventilelement an. Auf seiner dem Ventilelement abgewandten Seite stützt sich das Federelement beispielsweise an einem Ventilgehäuse des Ventils ab. Das Federelement ist derart ausgestaltet, dass es das Ventilelement stets in Richtung der ersten Stellung drängt, insbesondere bis in die erste Stellung. Vorzugsweise ist die Federkraft auch bei Vorliegen des Ventilelements in seiner ersten Stellung größer als null, sodass das Federelement das Ventilelement in der ersten Stellung hält. Mit einer solchen Ausgestaltung des Ventils werden die bereits genannten Vorteile erreicht.

Eine Weiterbildung der Erfindung sieht vor, dass das Ventilelement als Ventilkugel ausgestaltet und/oder der Ventilsitz kreisringförmig ist. Das Ventilelement liegt insoweit in Form einer Kugel vor. Zusätzlich oder alternativ weist der Ventilsitz die Gestalt eines kreisförmigen Rings auf. Dies ermöglicht ein besonders zuverlässiges Einstellen des Durchströmungsquerschnitts durch das Ventil, insbesondere ein vollständiges oder zumindest nahezu vollständiges Unterbrechen der Fluidströmung durch das Ventil bei Anordnung des Ventilelements in seiner ersten Stellung.

Eine Weiterbildung der Erfindung sieht vor, dass zumindest ein Teil der Vertiefungen, insbesondere alle der Vertiefungen, identisch ausgestaltet sind. Bei der Oberflächenstruktur handelt es sich also nicht um eine stochastische Struktur, beispielsweise eine Oberflächenrauheit, sondern die Vertiefungen sind gezielt an dem Ventilsitz und/oder dem Ventilelement ausgestaltet, beispielsweise durch Umformen oder durch Zerspanen. Das Umformen erfolgt bevorzugt durch Druckumformen, insbesondere durch Eindrücken, vorzugsweise durch Einprägen. Das Zerspanen erfolgt vorzugsweise durch Bohren oder Fräsen.

Es kann vorgesehen sein, die Vertiefungen in mehrere Gruppen zu unterteilen, wobei jede der Gruppen mehrere Vertiefungen aufweist, die untereinander identisch ausgestaltet sind. Insoweit sind alle Vertiefungen jeder der mehreren Gruppen gleich. Die Vertiefungen der unterschiedlichen Gruppen können sich jedoch voneinander unterscheiden, so sind also beispielsweise die Vertiefungen einer ersten Gruppe von den Vertiefungen einer zweiten Gruppe verschieden, beispielsweise weisen sie verschiedene Abmessungen auf.

Die identisch ausgestalteten Vertiefungen sind vorzugsweise symmetrisch an dem Ventilsitz und/oder dem Ventilelement angeordnet, beispielsweise symmetrisch bezüglich einer Längsmittelachse des Ventilsitzes. Vorzugsweise sind die identischen Vertiefungen entlang einer gedachten Linie, insbesondere einer gedachten geraden Linie oder einer gedachten Kreislinie, an dem Ventilsitz oder dem Ventilelement hergestellt. Bevorzugt sind die Vertiefungen jeder der Gruppen entlang einer solchen gedachten Linie angeordnet, beispielsweise also die Vertiefungen der ersten Gruppe entlang einer ersten Linie und die Vertiefungen der zweiten Gruppe entlang einer zweiten Linie. Vorzugsweise sind die Vertiefungen entlang der jeweiligen Linie gleichmäßig verteilt angeordnet, also äquidistant zueinander. Hierdurch wird ein reproduzierbares Schaltverhalten des Ventils erreicht.

Eine Weiterbildung der Erfindung sieht vor, dass die Vertiefungen gleichmäßig verteilt angeordnet sind und/oder dass zumindest ein Teil der Vertiefungen in einer Reihe oder in mehreren Reihen, insbesondere in Überdeckung vorliegenden Reihen, angeordnet sind. In Abgrenzung zu einer rein stochastischen Verteilung der Vertiefungen sollen diese gleichmäßig verteilt vorliegen, also insbesondere mit gleichmäßigen Abständen voneinander und/oder symmetrisch zueinander und/oder zu der Längsmittelachse. Zusätzlich oder alternativ sind die Vertiefungen in einer oder mehreren Reihen angeordnet. Die Vertiefungen sind also der Reihe oder mehreren Reihen zugeordnet. In letzterem Fall sind die Vertiefungen auf die mehreren Reihen aufgeteilt, sodass jede Reihe mehrere Vertiefungen enthält.

Die Reihen sind versetzt zueinander angeordnet, beispielsweise liegen die Vertiefungen der mehreren Reihen entlang unterschiedlicher Linien, insbesondere entlang unterschiedlicher Kreislinien, vor. Beispielsweise sind die Vertiefungen jeder Reihe in einer gedachten Ebene angeordnet, vorzugsweise verläuft die gedachte Ebene durch die Mittelpunkte der Vertiefungen. Die Reihen sind versetzt zueinander angeordnet, liegen jedoch insbesondere in Überdeckung zueinander vor. Das bedeutet, dass die Vertiefungen der Reihen einander überlappen, sodass also zwischen jeweils zwei der Vertiefungen einer ersten Reihe wenigstens eine Vertiefung einer zweiten Reihe angeordnet ist. Hierdurch wird ein besonders plausibles Schaltverhalten des Ventils erreicht.

Eine Weiterbildung der Erfindung sieht vor, dass zumindest ein Teil der Vertiefungen in einer Ventilelementfläche des Ventilelements ausgestaltet ist, mit welcher das Ventilelement in der ersten Stellung an einer Ventilsitzfläche des Ventilsitzes anliegt, und/oder dass zumindest ein Teil der Vertiefungen in der Ventilsitzfläche des Ventilsitzes ausgestaltet ist, an welcher das Ventilelement mit der Ventilelementfläche in der ersten Stellung anliegt. Auf die Definitionen der Ventilelementfläche und der Ventilsitzfläche wurde bereits eingegangen. Die Ventilelementfläche liegt in der ersten Stellung des Ventilelements an der Ventilsitzfläche an und umgekehrt. Vorzugsweise ist unter der Ventilelementfläche lediglich derjenige Bereich des Ventilelements zu verstehen, welcher in der ersten Stellung an dem Ventilsitz beziehungsweise der Ventilsitzfläche anliegt. Umgekehrt ist vorzugsweise unter der Ventilsitzfläche lediglich derjenige Bereich des Ventilsitzes zu verstehen, welcher in der ersten Stellung des Ventilelements an dem Ventilelement beziehungsweise der Ventilelementfläche anliegt.

Die Ventilelementfläche und/oder die Ventilsitzfläche ist nun mit den Vertiefungen beziehungsweise einem Teil der Vertiefungen versehen, sodass die jeweilige Fläche von den Vertiefungen durchgriffen ist. Beispielsweise sind die Vertiefungen derart bemessen, dass bei dem Anliegen des Ventilelements an dem Ventilsitz, also bei dem Vorliegen des Ventilelements in seiner ersten Stellung, durch zumindest einen Teil der Vertiefungen eine Strömungsverbindung durch das Ventil beziehungsweise durch den Ventilsitz hindurch hergestellt ist. Die Vertiefungen bedingen insoweit eine geringe Leckage durch das Ventil, sodass der erste Durchströmungsquerschnitt größer als null ist, insbesondere lediglich geringfügig größer als null. Beispielsweise ist also der erste Durchströmungsquerschnitt größer als null, beträgt jedoch höchstens 1 %, höchstens 0,5 % oder höchstens 0,1 % des zweiten Durchströmungsquerschnitts. Die beschriebene Ausgestaltung des Ventils ermöglicht ein zuverlässiges Schalten, insbesondere ein rasches Öffnen, über die gesamte Lebensdauer des Ventils hinweg.

Eine Weiterbildung der Erfindung sieht vor, dass die Vertiefungen teilkugelförmig sind. Die Vertiefungen weisen also die Gestalt einer Teilkugel auf, insbesondere sind die Vertiefungen teilweise teilkugelförmig. Beispielsweise bildet die Teilkugelform eine tiefste Stelle der Vertiefungen, stellt also einen die jeweilige Vertiefung begrenzenden Grund beziehungsweise Boden dar. Es ist jedoch nicht notwendig, dass die Vertiefungen insgesamt durchgehend teilkugelförmig sind. Es kann vielmehr vorgesehen sein, dass jede der Vertiefungen einen teilkugelförmigen Bereich hat, an welchen sich ein anders geformter Bereich anschließt. Die teilkugelförmigen Vertiefungen sind besonders einfach und ohne materialabtrag herstellbar, beispielsweise durch Umformen, vorzugsweise durch Prägen. Die bereits erwähnten Vorteile werden mit einer solchen Ausgestaltung des Ventils erreicht.

Eine Weiterbildung der Erfindung sieht vor, dass die Vertiefungen die Ventilelementfläche und/oder die Ventilsitzfläche unter Ausbildung eines durchgehenden, insbesondere gerundeten, Rands durchgreifen. Die Vertiefungen durchgreifen die Oberfläche des Ventilelements beziehungsweise die Oberfläche des Ventilsitzes unter Bildung einer jeweiligen Mündungsöffnung. Hierbei entsteht der Rand, welcher durchgehend ausgestaltet ist, also die Mündungsöffnung in Umfangsrichtung vollständig und durchgehend umgreift. Beispielsweise liegt der Rand in Form einer Randkante vor, sodass die Vertiefung unstetig in die jeweilige Oberfläche, also in die Ventilelementfläche oder die Ventilsitzfläche, übergeht. Vorzugsweise ist der Rand jedoch gerundet, sodass ein stetiger Übergang in die Oberfläche hergestellt ist. Der Rand ist insoweit derart ausgestaltet, dass sich die Vertiefungen jeweils nach Art eines Trichters öffnen. Mit einer solchen Ausgestaltung wird der Turbulenzgrad des Fluids in dem Ventil geringgehalten.

Eine Weiterbildung der Erfindung sieht vor, dass die Vertiefungen Abmessungen aufweisen, welche mindestens 2,5 %, mindestens 5 % oder mindestens 7,5 % und/oder höchstens 15 %, höchstens 12,5 % oder höchstens 10 % von Abmessungen des Ventilsitzes oder von Abmessungen des Ventilelements in derselben Richtung betragen. Wiederum wird deutlich, dass die Vertiefungen nicht bloßer Bestandteil einer Oberflächenrauheit sind, sondern dass sie relevante Abmessungen aufweisen. Bezogen auf die Abmessungen des Ventilelements in einer bestimmten Richtung entsprechen die Abmessungen der Vertiefungen mindestens einem der genannten Werte und/oder höchstens einem der genannten Werte.

Beispielsweise sind die Werte hierbei auf einen Durchmesser des Ventilelements und/oder einen Durchmesser des Ventilsitzes bezogen. Die Abmessungen betragen vorzugsweise mindestens 2,5 % und höchstens 15 % der Abmessungen des Ventilelements beziehungsweise des Ventilsitzes, mindestens 5 % und höchstens 12,5 % oder mindestens 7,5 % und höchstens 10 % der genannten Abmessungen. Hierdurch werden die bereits genannten Vorteile erreicht.

Eine Weiterbildung der Erfindung sieht vor, dass ein Abstand zwischen unmittelbar benachbarten Vertiefungen mindestens Abmessungen der Vertiefungen in dieser Richtung entspricht oder um einen Faktor von mindestens 1,5, mindestens 2 oder mindestens 2,5 größer ist, und/oder dass der Abstand zwischen den unmittelbar benachbarten Vertiefungen um einen Faktor von höchstens 2,5, höchstens 2 oder höchstens 1,5 größer ist als die Abmessungen der Vertiefungen in dieser Richtung. Unter den unmittelbar benachbarten Vertiefungen sind Vertiefungen zu verstehen, zwischen welche keine weitere der Vertiefungen angeordnet ist. Die unmittelbar benachbarten Vertiefungen weisen nun den Abstand voneinander auf, welcher mindestens so groß ist wie Abmessungen der Vertiefungen in derselben Richtung.

Vorzugsweise ist der Abstand zwischen ihnen größer als die Abmessungen, beispielsweise um den Faktor von mindestens 1,5, mindestens 2 oder mindestens 2,5. Zusätzlich oder alternativ ist der Abstand zwischen den unmittelbar benachbarten Vertiefungen um einen Faktor von höchstens 2,5, höchstens 2 und höchstens 1,5 größer als die Abmessungen der Vertiefungen in derselben Richtung. Besonders bevorzugt weisen alle benachbarten Vertiefungen dieselben Abstände voneinander auf, welche dem hier beschriebenen Abstand entsprechen. Besonders bevorzugt ist zumindest ein Teil der Vertiefungen äquidistant zueinander angeordnet, wobei der Abstand zwischen jeweils zwei der Vertiefungen dem hier beschriebenen Abstand entspricht. Auch mithilfe einer solchen Ausgestaltung des Ventilen werden die bereits erläuterten Vorteile erzielt.

Die Erfindung betrifft weiterhin ein Verfahren zum Herstellen eines Ventils für eine strömungstechnische Einrichtung, insbesondere eines Ventils gemäß den Ausführungen im Rahmen dieser Beschreibung, wobei das Ventil über einen Ventilsitz und ein relativ zu dem Ventilsitz verlagerbares Ventilelement verfügt, das in einer ersten Stellung zum Einstellen eines ersten Durchströmungsquerschnitts durch den Ventilsitz an dem Ventilsitz anliegt und in einer zweiten Stellung zum Einstellen eines von dem ersten Durchströmungsquerschnitt verschiedenen zweiten Durchströmungsquerschnitts durch den Ventilsitz von dem Ventilsitz beabstandet angeordnet ist. Dabei ist vorgesehen, dass der Ventilsitz und/oder das Ventilelement zur Reduzierung einer Haftwirkung zwischen Ventilsitz und Ventilelement mit einer mehrere Vertiefungen aufweisenden Oberflächenstruktur versehen werden/wird.

Auf die Vorteile einer solchen Vorgehensweise beziehungsweise einer derartigen Ausgestaltung des Ventils wurde bereits hingewiesen. Sowohl das Ventil als auch das Verfahren zu seinem Herstellen können gemäß den Erläuterungen im Rahmen dieser Beschreibung weitergebildet sein, sodass auf diese verwiesen wird.

Eine Weiterbildung der Erfindung sieht vor, dass das Versehen mit der Oberflächenstruktur durch Verlagern des Ventilelements relativ zu dem Ventilsitz erfolgt. Beispielsweise sind hierbei der Ventilsitz und das Ventilelement geometrisch und werkstofflich so gewählt, dass die Oberflächenstruktur hergestellt wird, wenn das Ventilelement auf den Ventilsitz trifft, also mit diesem in Kontakt gerät. Vorzugsweise erfolgt das Herstellen der Oberflächenstruktur durch Prägen. Es kann vorgesehen sein, dass der Ventilsitz und das Ventilelement aus unterschiedlichen Materialien bestehen, insbesondere aus dem Ventilsitzmaterial und dem Ventilelementmaterial.

Bevorzugt weisen die Materialien unterschiedliche Härtegrade auf, sodass dasjenige Element aus dem härteren Material die Oberflächenstruktur in dasjenige Element aus dem weicheren Material einprägt. Zu diesem Zweck weist eines der Elemente, also der Ventilsitz oder das Ventilelement, eine Umformstruktur, beispielsweise eine Prägestruktur, auf, welche bei dem Auftreffen des Ventilelements auf den Ventilsitz die Oberflächenstruktur ausbildet. Die Umformstruktur ist hierbei vorzugsweise eine Positivstruktur, weist also Vorsprünge auf, während die Oberflächenstruktur eine Negativstruktur ist, welche über die Vertiefungen verfügt.

Vorzugsweise wird die Oberflächenstruktur erst nach einer Montage des Ventils hergestellt. Insbesondere ist es vorgesehen, das Ventil zu montieren, also den Ventilsitz und das Ventilelement in einem Ventilgehäuse des Ventils herzustellen beziehungsweise anzuordnen. Anschließend wird das Ventil derart betrieben, dass sich das Ventilelement relativ zu dem Ventilsitz bewegt und hierbei auf diesen auftrifft. Bevorzugt wird das Ventil mit Fluid beaufschlagt, sodass die Verlagerung des Ventilelements erzielt wird. Beispielsweise erfolgt das Beaufschlagen mit Fluid so, dass eine definierte Anzahl an Verlagerungen des Ventilelements in Richtung des Ventilsitzes und von dem Ventilsitz fort, insbesondere mit einer definierten Geschwindigkeit, erfolgt.

Besonders bevorzugt erfolgt das Herstellen der Oberflächenstruktur erst nach einem Montieren des Ventils in der strömungstechnischen Einrichtung und insoweit während eines Betriebs dieser Einrichtung. Die Erfindung betrifft entsprechend auf ein Verfahren zum Betreiben der strömungstechnischen Einrichtung. Das Betreiben erfolgt so, dass die Oberflächenstruktur hergestellt wird. Beispielsweise wird das Ventil während eines ersten Betriebszeitraums zum Herstellen der Oberflächenstruktur betrieben und während eines auf den ersten Betriebszeitraum folgenden Betriebszeitraum derart, dass die Oberflächenstruktur zur Reduzierung der Haftstruktur genutzt wird. Insbesondere wird die Oberflächenstruktur während des zweiten Betriebszeitraums nicht oder zumindest nicht deutlich weiter ausgebildet.

Es kann vorgesehen sein, dass das Ventil während des ersten Betriebszeitraums mit einem höheren ersten Druck und während des zweiten Betriebszeitraums mit einem niedrigeren zweiten Druck beaufschlagt wird. Der erste Druck ist so gewählt, dass die Oberflächenstruktur hergestellt wird. Der zweite Druck ist niedriger, beispielsweise beträgt er höchstens 80 %, höchstens 60 % oder höchstens 40 % des ersten Drucks. So wird vermieden, dass aufgrund einer fortlaufenden Umformung eine Beschädigung des Ventils auftreten kann. Die beschriebene Vorgehensweise ermöglicht eine besonders einfache und effiziente Herstellung des Ventils, insbesondere der Oberflächenstruktur.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Bereichs eines Ventils, wobei ein Ventilsitz und ein teiltransparent dargestelltes Ventilelement zu erkennen sind, sowie
- Figur 2: eine schematische Teilschnittdarstellung des Ventilsitzes.

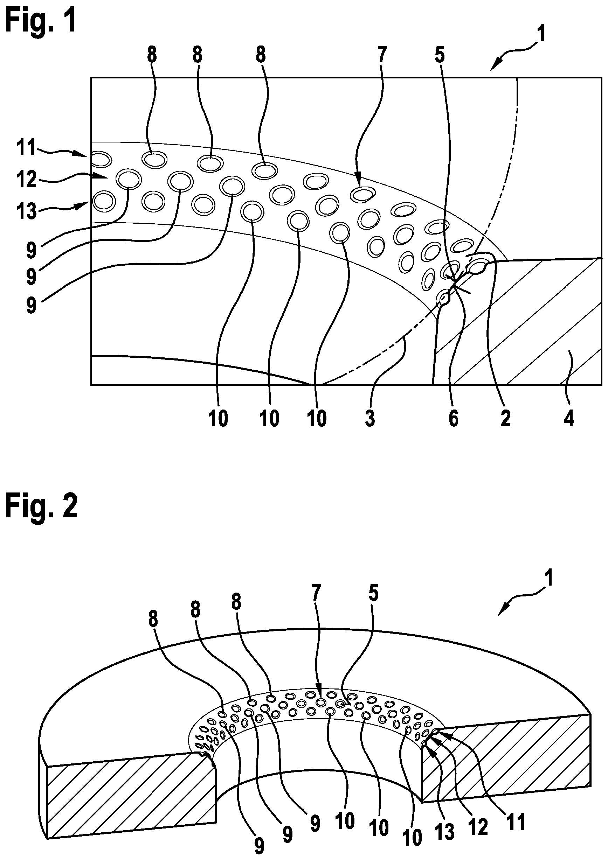

Die Figur 1 zeigt eine äußerst schematische Darstellung eines Bereichs eines Ventils 1, welches beispielsweise als Rückschlagventil vorliegt. Von dem Ventil 1 sind ein Ventilsitz 2 sowie ein Ventilelement 3 dargestellt, wobei das Ventilelement 3 teiltransparent abgebildet ist. Der Ventilsitz 2 ist beispielsweise von einem Ventilgehäuse 4 des Ventils 1 gebildet oder liegt alternativ an einem in das Ventilgehäuse 4 eingesetzten Einsetzteil vor. Der Ventilsitz 2 ist kreisringförmig, das Ventilelement 3 liegt als Ventilkugel vor. In dem dargestellten Ausführungsbeispiel ist das Ventilelement 3 mit einer glatten Oberfläche versehen, seine Außenkontur weist also die Gestalt einer Kugel auf.

Das Ventilelement 3 liegt in eine hier dargestellten Stellung des Ventilelements 3 relativ zu dem Ventilsitz 2 mit einer Ventilsitzfläche 5 an dem Ventilelement 3 und das Ventilelement 3 mit einer Ventilelementfläche 6 an dem Ventilsitz 2 an. Insbesondere liegt also die Ventilsitzfläche 5 an der Ventilelementfläche 6 und umgekehrt an. Der Ventilsitz 2, insbesondere seine Ventilsitzfläche 5, ist mit einer Oberflächenstruktur 7 versehen, welche mehrere Vertiefungen 8, 9 und 10 aufweist, die lediglich teilweise gekennzeichnet sind.

Die Vertiefungen 8 sind in einer ersten Reihe 11, die Vertiefungen 9 in einer zweiten Reihe 12 und die Vertiefungen 10 in einer dritten Reihe 13 angeordnet. Die Vertiefungen 8, 9 und 10 jeder der Reihen 11, 12 und 13 sind entlang einer gedachten Kreislinie beziehungsweise eines gedachten Kreisbogens angeordnet. Anders ausgedrückt liegen die Vertiefungen 8 in einer ersten gedachten Ebene, die Vertiefungen 9 in einer zweiten gedachten Ebene und die Vertiefungen 10 in einer dritten gedachten Ebene, wobei die gedachten Ebenen parallel beabstandet zueinander angeordnet sind. Vorzugsweise stehen die Ebenen zudem jeweils senkrecht auf einer gedachten Längsmittelachse des Ventilsitzes 2.

Es kann vorgesehen sein, dass die Vertiefungen 8, 9 und 10 der Reihen 11, 12 und 13 nicht überlappend angeordnet, sondern mit Abstand zueinander vorliegen sind. Es kann jedoch auch vorgesehen sein, dass die Vertiefungen 8, 9 beziehungsweise 10 einer der Reihen 11, 12 beziehungsweise 13 zwischen die Vertiefungen 8, 9 beziehungsweise 10 einer anderen der Reihen 11, 12 beziehungsweise 13 eingreifen. In Umfangsrichtung bezüglich der Längsmittelachse des Ventilsitzes 2 sind die Vertiefungen 9 gegenüber den Vertiefungen 8 und gegenüber den Vertiefungen 10 versetzt. Die Vertiefungen 8 und 9 sind in Umfangsrichtung jedoch in Überdeckung miteinander angeordnet.

Die Vertiefungen 8, 9 und 10 beziehungsweise die von ihnen gebildete Oberflächenstruktur bewirken eine Verringerung einer Haftwirkung zwischen dem Ventilsitz 2 und dem Ventilelement 3. Hierdurch wird ein Öffnen des Ventils 1 erleichtert, also ein Verlagern des Ventilelements 3 von dem Ventilsitz 2 fort. Dies gilt über die Lebensdauer des Ventils 1 hinweg, während welcher mit der Zeit eine plastische Verformung des Ventilsitzes 2 aufgrund eines wiederholten Anschlagen des Ventilelements 3 an den Ventilsitz 2 auftreten kann. Der von dieser Verformung bewirkten Haftwirkung zwischen dem Ventilsitz 2 und dem Ventilelement 3 wird mit der Oberflächenstruktur effektiv entgegengewirkt.

Die Figur 2 zeigt eine schematische Teilschnittdarstellung des Ventilsitzes 2. Es wird deutlich, dass die Vertiefungen 8, 9 und 10 in Umfangsrichtung bezüglich der Längsmittelachse des Ventilsitzes 2 jeweils durchgehend vorliegen und hierbei untereinander äquidistant zueinander angeordnet sind. Hierunter ist zu verstehen, dass die Vertiefungen 8, 9 und 10 jeweils über den gesamten Umfang des Ventilsitzes 2 verteilt angeordnet sind, insbesondere gleichmäßig . Das bedeutet, dass die Vertiefungen 8 identische Abstände voneinander aufweisen, und dass dies für die Vertiefungen 9 und 10 jeweils ebenfalls gilt. Mit einer solchen Ausgestaltung des Ventils 1 werden die bereits genannten Vorteile auf konstruktiv einfache Art und Weise erreicht.

### BEZUGSZEICHENLISTE:

- 1: Ventil
- 2: Ventilsitz
- 3: Ventilelement
- 4: Ventilgehäuse
- 5: Ventilsitzfläche
- 6: Ventilelementfläche
- 7: Oberflächenstruktur
- 8: Vertiefung
- 9: Vertiefung
- 10: Vertiefung
- 11: 1. Reihe
- 12: 2. Reihe
- 13: 3. Reihe

## Patentansprüche

1. Ventil (1) für eine strömungstechnische Einrichtung, mit einem Ventilsitz (2) und einem relativ zu dem Ventilsitz (2) verlagerbaren Ventilelement (3), das in einer ersten Stellung zum Einstellen eines ersten Durchströmungsquerschnitts durch den Ventilsitz (2) an dem Ventilsitz (2) anliegt und in einer zweiten Stellung zum Einstellen eines von dem ersten Durchströmungsquerschnitt verschiedenen zweiten Durchströmungsquerschnitts durch den Ventilsitz (2) von dem Ventilsitz (2) beabstandet angeordnet ist, **dadurch gekennzeichnet, dass** der Ventilsitz (2) und/oder das Ventilelement (3) zur Reduzierung einer Haftwirkung zwischen Ventilsitz (2) und Ventilelement (3) mit einer mehrere Vertiefungen (8, 9, 10) aufweisenden Oberflächenstruktur (7) versehen sind/ist.

2. Ventil nach Anspruch 1, **dadurch gekennzeichnet, dass** das Ventil (1) als Rückschlagventil ausgestaltet und das Ventilelement (3) von einem Federelement mit einer in Richtung des Ventilsitzes (2) gerichteten Federkraft beaufschlagt ist.

3. Ventil nach einem der vorhergehenden Ansprüche, **dadurch gekennzeichnet, dass** das Ventilelement (3) als Ventilkugel ausgestaltet und/oder der Ventilsitz (2) kreisringförmig ist.

4. Ventil nach einem der vorhergehenden Ansprüche, **dadurch gekennzeichnet, dass** zumindest ein Teil der Vertiefungen (8, 9, 10) identisch ausgestaltet sind.

5. Ventil nach einem der vorhergehenden Ansprüche, **dadurch gekennzeichnet, dass** die Vertiefungen (8, 9, 10) gleichmäßig verteilt angeordnet sind und/oder dass zumindest ein Teil der Vertiefungen (8, 9, 10) in einer Reihe (11, 12, 13) oder in mehreren Reihen (11, 12, 13) angeordnet sind.

6. Ventil nach einem der vorhergehenden Ansprüche, **dadurch gekennzeichnet, dass** zumindest ein Teil der Vertiefungen (8, 9, 10) in einer Ventilelementfläche (6) des Ventilelements (3) ausgestaltet ist, mit welcher das Ventilelement (3) in der ersten Stellung an einer Ventilsitzfläche (5) des Ventilsitzes (2) anliegt, und/oder dass zumindest ein Teil der Vertiefungen (8, 9, 10) in der Ventilsitzfläche (5) des Ventilsitzes (2) ausgestaltet ist, an welcher das Ventilelement (3) mit der Ventilelementfläche (6) in der ersten Stellung anliegt.

7. Ventil nach einem der vorhergehenden Ansprüche, **dadurch gekennzeichnet, dass** die Vertiefungen (8, 9, 10) teilkugelförmig sind.

8. Ventil nach einem der vorhergehenden Ansprüche, **dadurch gekennzeichnet, dass** die Vertiefungen (8, 9, 10) die Ventilelementfläche (6) und/oder die Ventilsitzfläche (5) unter Ausbildung eines durchgehenden Rands durchgreifen.

9. Verfahren zum Herstellen eines Ventils (1) für eine strömungstechnische Einrichtung, insbesondere eines Ventils (1) nach einem oder mehreren der vorhergehenden Ansprüche, wobei das Ventil (1) über einen Ventilsitz (2) und ein relativ zu dem Ventilsitz (2) verlagerbares Ventilelement (3) verfügt, das in einer ersten Stellung zum Einstellen eines ersten Durchströmungsquerschnitts durch den Ventilsitz (2) an dem Ventilsitz (2) anliegt und in einer zweiten Stellung zum Einstellen eines von dem ersten Durchströmungsquerschnitt verschiedenen zweiten Durchströmungsquerschnitts durch den Ventilsitz (2) von dem Ventilsitz (2) beabstandet angeordnet ist, **dadurch gekennzeichnet, dass** der Ventilsitz (2) und/oder das Ventilelement (3) zur Reduzierung einer Haftwirkung zwischen Ventilsitz (2) und Ventilelement (3) mit einer mehrere Vertiefungen (8, 9, 10) aufweisenden Oberflächenstruktur (7) versehen werden/wird.

10. Verfahren nach Anspruch 9, **dadurch gekennzeichnet, dass** das Versehen mit der Oberflächenstruktur (7) durch Verlagern des Ventilelements (3) relativ zu dem Ventilsitz (2) erfolgt.
